# EUROPEAN PATENT SPECIFICATION

(11) **EP 2 897 236 B1**
(45) Date of publication and mention of the grant of the patent: **27.12.2017**
(21) Application number: 13836958.2
(22) Date of filing: 16.09.2013
(51) Int. Cl.: H01R 25/14, H01R 13/627, H01R 31/06, H01R 24/78

(54) **ELECTRICAL OUTLET MODULE**
ELEKTRISCHES AUSLASSMODUL
MODULE POUR PRISE DE COURANT

(30) Priority: 17.09.2012 ES 201230963
(43) Date of publication of application: 22.07.2015
(73) Proprietor: Sistemas Metalper, S.L., 46630 La Font de la Figuera, Valencia (ES)
(72) Inventor: PERALES FAYOS, Ángel, E-46630 La Font de la Figuera (Valencia) (ES); GRAMAGE REVERT, Sergio Faustino, E-46630 La Font de la Figuera (Valencia) (ES)
(74) Representative: Isern-Jara, Nuria
(86) International application number: PCT/ES2013/070641
(87) International publication number: WO 2014/041230

(56) References cited:
- CN-Y- 201 285 970
- ES-U- 1 068 230
- GB-A- 1 070 091
- GB-A- 2 067 363
- JP-A- S5 949 175
- US-A- 5 306 165
- US-B1- 6 350 135
- US-B1- 7 094 077
- US-B2- 7 438 566

## Description

### Object of the invention

The present invention relates to an electrical outlet module comprising a guide and an electrical outlet that slides along said guide, where the guide houses metallic plates in the inside thereof designed to take the electric phase and earth conduction to the electrical outlet that is in contact with the plates via brushes, said brushes and plates scraping against each other and ensuring the electrical contact between the plates and brushes of the electrical outlet during the sliding movement of the electrical outlet, which comprises universal electrical outlets capable of connecting male plugs of different morphologies, according to the uses of different countries and regions, the installation and use of said module being especially relevant for electrical outlets in those places and establishments where people from different countries or regions may meet who wish to connect appliances incorporating different types of male plugs to the electricity grid, such as in hotels and similar accommodation businesses, ports, airports, stations, fairs, conferences, and international events (sports, etc.).

It finds application in the industry field dedicated to the manufacture or marketing of plugs and electrical materials or components. This same field also including the sector dedicated to electrical installations and to electricity in general. As well as the market sectors that manufacture or market plastic elements together with all their sub-products. Particularly considering the field of profiling, moulding, casting and extrusion of plastic or PVC guides and pieces.

### Technical problem to be solved and background of the invention

There are currently many different designs for plugs, female sockets (electrical outlets) and male plugs (pins), designs either having only an aesthetic purpose, or also a technical purpose. In addition to matters related to the design of electrical outlets, there is a plurality of types of electrical outlets, which enable male plugs of different morphologies according to the uses of different countries and regions to be connected. Among the different types of electrical outlets, there is a type of electrical outlet, referred to as universal, which enables different types of male plugs to be alternatively connected in the same electrical outlet. The installation of these types of electrical outlets is especially relevant in places such as hotels, airports, railway stations, etc., which may receive people coming from regions with different types of electrical connection to the grid.

At the same time, there are different types of electrical outlet accumulators, constituting what is normally referred to as multiple sockets and strips. The majority of these strips include a predetermined number of electrical outlets, and a connecting cable to a fixed electrical outlet, of certain length, in order to enable connection in different separated points of said fixed electrical outlet. Utility model ES 1068230 U, the ownership of which belongs to the applicant herein, introduces a guide model for electrical outlets, with the ability to slide said electrical outlets along said guides, thus enabling an undetermined number of electrical outlets to be included.

The present invention aims to fill a gap in the current state of the art, related to the installation of universal type sliding electrical outlets on guides. In addition to introducing the aforementioned novelty, the present invention includes a new design for said guides, which reduces the connection fragility between electrical outlets and guides in the aforementioned utility model. Likewise, universal type sliding electrical outlets, object of the present invention, comprise a safety system that prevents the accidental insertion of objects or a person's fingers, with the consequent risk of electrocution, for the so-called UK type of connection in the universal type sliding electrical outlet, since this type of connection presents female terminals of greater calibre, thus presenting a greater risk.

Therefore, the present invention solves two existing problems in the current state of the art:
The fragility in the current connection system of the sliding electrical outlets to the guides along which they slide, through a new design for the guides.
The lack of universal type sliding plugs.

### Description of the invention

An electrical outlet module according to the invention is defined by appended claim 1 and comprises, among others, a guide and electrical outlets that slide along said guide, where the guide for the electrical outlets comprise at least one strip (with at least one groove in the front face thereof, through which an inner space of the strip can be accessed) that houses in the inside thereof metallic plates that conduct the electric current to the electrical poles of the sliding electrical outlet, an earth pole and phase poles, and said sliding electrical outlet comprises metallic brushes in such a way that they are inserted through the groove providing access to the inner space of the strip of the guide, and said brushes carry out a permanent electrical contact with the metallic plates of the guide thus ensuring the continuity of the electric current flow to the electrical outlet.

The strip of the guide comprises two side grooves, each of them respectively positioned to both sides of the central groove that provides access to the inner space of the strip, the purpose of which is to guide the sliding movement of the electrical outlet along the length of the guide and avoid levering stresses on the connection of the sliding electrical outlet to the guide, providing greater consistency to the fastening of the sliding electrical outlet to said guide. The sliding electrical outlets comprise at least two retaining flanges, each one of them respectively positioned on the upper edge and lower edge of the rear portion of said electrical outlet, each of these retaining flanges being inserted into each of the side grooves situated on both sides of the central groove giving access to the inner space of the strip, carrying out the fastening of the electrical outlet to the guide, likewise enabling the sliding movement of the electrical outlet along the guide.

The electrical outlet module comprises a universal type electrical outlet, in which any type of male plug may be connected, including the UK plug and the L-type plug, for which there are holes in the electrical outlet that enable the phase and earth contacts of said plugs to be connected.

For the UK plug there are UK connection side holes and a UK connection central hole in the electrical outlet in order to insert the phase and earth connections of the UK plug; and, for the L plug there are the UK connection side holes and a central L connection hole in the electrical outlet in order to introduce the phase and earth contacts of the L-type plug.

Said universal type electrical outlet includes a compartment (covered by a lid) in the front portion thereof, which houses an electrical protector against accidental electrical contacts for the UK type connection electrical outlet, said electrical protector comprising ramps situated so as to obstruct the electrical poles inlet holes (earth pole and phase poles) of the UK connection, where upon insertion of the male plug, the electrical protector ramps yield elastically downwards leaving the holes open.

There are three metallic plates situated inside the strip of the guide for the electrical outlet module, which correspond to a single-phase electrical outlet with an earth connection. The metallic plate intended for conducting earth current is housed in the inner space of the strips, specifically in a conduit situated on the face opposite the face comprising the central groove that provides access to the inner space of the strip, and the metallic plates intended for conducting the phase current are housed in the inner space of the strips, specifically in each conduit situated on both sides of the central groove that provide access to the inner space of the strip.

There are three metallic brushes of the electrical outlets, and they have a laminate morphology with a concave profile such that they exert a certain elastic pressure upon the metallic plates of the guides, thus ensuring a permanent electrical contact and likewise enabling the sliding movement of the electrical outlet along the guides without losing said electrical contact. The concave profile of the metallic brushes is formed by a plurality of flat faces.

The guides of electrical outlet module also comprise: a connection box, embedded in a first end of the strip; an electrical connector housed inside the connection box, by means of which the electrical current is inserted into the electrical outlet module; a lid closing the front of the connection box; a box by way of guide end, said box fitting into a second end of the strip; a lid closing said box by way of end guide; a mechanical extender fitted to two strips by the end sections thereof, making tabs of said mechanical extender to fit into the bent flanges of the strip, thus enabling the consecutive installation of two strips; an electrical extender formed by two electrical connectors facing each other and attached both mechanically and electrically to each other by one of their faces provided with holes; a trim concealing the mechanical extender and electrical extender; and angular profiles comprising a longitudinal key that is inserted in a keyway present in each of the upper and lower faces of the strip.

The electrical connector of the guides comprises: holes in one of the faces thereof, cables or other electric current conducting elements being inserted through these holes; a screw to retain and fasten said electric current conducting elements; metallic bands with a curved profile, exerting an elastic pressure on the plates of the strips, thus ensuring the electrical connection, and; a projection provided with a screw, said projection being introduced through the inside of the groove that provides access to the inner space of the strip, the screw head remaining outside said groove, in such a way that when turning the screw, the electrical connector is retained and fastened to the power strip.

According to an embodiment of the guide for the electrical outlet module, the guide is installed embedded in a wall recess by means of a casing that is fastened to the wall recess via clamping flanges, said casing comprising wings facing each other for fastening the strip of the guide, the strip being press-fitted between the wings, both with intervening angular profiles (which fit into the strip by inserting the key into one of the faces of the angular profiles in the keyway present in the upper and lower bases of the strips), where the casing has a C-shaped laminate profile geometry, and acts as receptacle for the strip, serving as an intermediate surface between the wall recess and the strip. In this embodiment, the angular profiles comprise an adhesive face on the concave portion thereof, in such a way that said angular profiles remain stuck to the wall, thus carrying out the guide fastening to the wall. The aforementioned casing is closed at the ends thereof by means of two corner protectors, said corner protectors comprising a hole for the insertion of a cable that transports the electric current to the metallic plates of the strip.

In another embodiment of the guide for the electrical outlet module, said guide comprises supports fastened to the wall, said supports comprising tabs that fit into the bent flanges of the strips, in such a way that the strip is made to fit into the support, the guide thus being retained and fastened to the wall, the angular profiles being inserted into the strip causing the key in one of the faces of said angular profiles to fit into the keyway present in each one of the upper and lower faces of the strip.

The two electric connectors forming the electrical extender are connected by inserting cables or metallic plates through the holes of each one of the electrical connectors, in such a way that one end of each cable is inserted into each one of the holes of an electrical connector and the other end of the same cable is inserted into the corresponding hole of the other electrical connector, the retaining and clamping screw of each electrical connector being turned in order to retain and fasten the cables to each electrical connector.

The guide (1, 2) comprises a coupling profile (705) that comprises a longitudinal removable sealing gasket (703) to prevent dirt, liquids, etc. from entering inside the guide (1, 2).

The longitudinal removable sealing gasket (703) is made of a material selected from between plastic, gum, rubber, silicone, soft metal, cork, felt, fibreglass and plastic polymer.

### Brief description of the figures

The present description shall be better understood in light of the following figures:
Figure 1 : Shows a first embodiment of the guide for the sliding electrical outlets module, object of the present invention.
Figure 2 : Shows a second embodiment of the guide for the sliding electrical outlets module, object of the present invention.
Figure 3a : Shows a sectional view of the guide, according to a first embodiment.
Figure 3b : Shows a sectional view of the guide, according to a second embodiment.
Figure 4a : Shows an exploded perspective view of the (universal type) electrical outlet module for sliding electrical outlets, object of the present invention.
Figure 4b : Shows a detailed view of the inner face of the compartment lid that houses the electrical protector of the electrical outlet.
Figure 4c : Shows a detailed view of the brushes and electrical contacts of the electrical outlet.
Figure 5 : Shows a rear view of the electrical outlet.
Figure 6 : Shows a view of the (L-type) electrical outlet along with the guide according to the first embodiment, where it may be seen how the guide comprises a coupling profile (705) comprising a longitudinal removable sealing gasket (703) in order to prevent dirt or liquids from entering inside the guide (1, 2).

A list of references used in the figures is provided below:
1. Guide, according to a first embodiment.
2. Guide, according to a second embodiment
3. Electrical outlet.
101. Strip.
102. Support.
103. Connection box.
104. Closing box.
105. Connection box lid.
106. Closing box lid.
107. Electrical connector.
108. Angular profile.
109. Mechanical extender.
110. Trim.
111. Tabs.
112. Central hole of the mechanical extender.
113. Side holes of the mechanical extender.
114. Metallic earth band.
115. Metallic phase bands.
116. Projection provided with a screw.
117. Base of the electrical connector.
118. Base with projections.
119. Holes of the electrical connector.
120. Clamping screw.
121. Casing.
122. Corner protector.
123. Attachment notches.
124. Wings of the casing.
125. Support tabs.
126. Key.
201. Front base of the strip.
202. Rear base of the strip.
203. Upper and lower bases of the strip.
204. Keyways.
205. Bent flanges of the strip.
206. Side grooves.
207. Central groove.
208. Side conduit of the strip.
209. Central conduit of the strip.
212. Metallic side plates of the strip.
213. Metallic central plates of the strip.
214a. First end of the strip.
214b. Second end of the strip.
215. Slots of the connection box.
216. First hole of the connection box.
217. Second hole of the connection box.
218. First hole of the closing box.
219. Second hole of the closing box.
220. Tabs of the closing box.
221. Tabs of the connection box.
222. Switch.
301. Outer casing of the electrical outlet.
302. Inner casing of the electrical outlet.
303. Upper portion of the rear lid of the electrical outlet
304. Lower portion of the rear lid of the electrical outlet.
305. Electrical protector.
306. Electrical protector lid.
307. Earth connection brush.
308. Earth pole.
309. Phase brushes.
310. Phase poles.
400. Electrical outlet hole.
401. Through-holes of the lids.
402. Bearing.
403. Supplementary hole of the electrical outlet.
404. Ramps.
501. Top lid projection.
502. Lower lid projection.
503. Retaining flanges.
503a. Collateral flanges.
504. Recesses of the lids.
505. Compartment.
601. Earth pole flange.
602. Groove.
603. Earth connection brush flange.
701. UK connection side holes.
702. UK connection central hole.
703. Longitudinal removable sealing gasket.
704. L-connection central hole.
705. Gasket coupling profile.

### Detailed description

The present invention relates to an electrical outlet module comprising sliding electrical outlets (3) and the corresponding guide (1, 2) along which the sliding electrical outlets (3) slide.

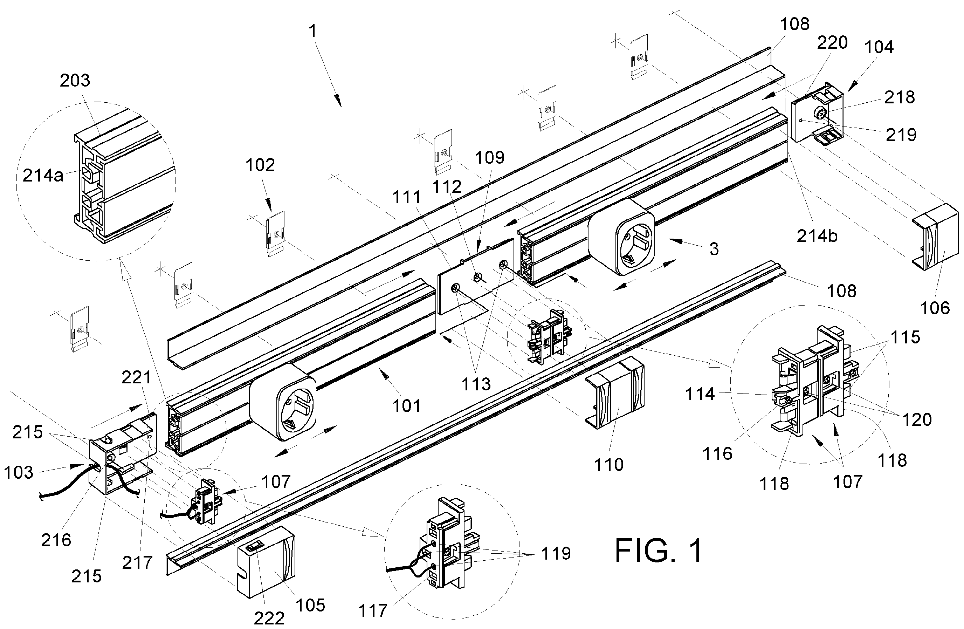

Figure 1 shows a first embodiment of the present invention, according to which the guide (1) for the electrical outlet module is installed on the surface of a wall.

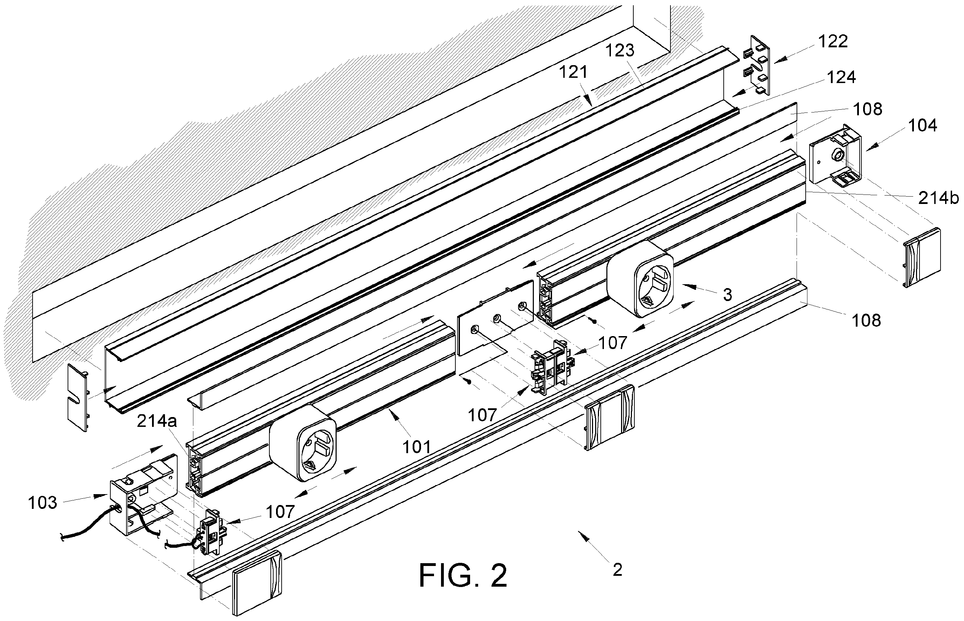

Figure 2 shows a second embodiment of the present invention, according to which the guide (2) for the electrical outlet module is embedded in a wall recess.

As shown in figure 1, according to the first embodiment for the guide (1) of the present invention, said guide (1) comprises a first element by way of support (102) that is fastened to the wall, and holds a strip (101) on which the electrical outlets (3) slide.

As figure 2 shows, according to the second embodiment for the guide (2) of the present invention, said guide (2) comprises a first element by way of a casing (121), with a geometry that is typical of an open laminate profile with a "C"-shaped cross-section, which is made to fit into a wall recess and retained inside said recess by means of attachment notches (123) and is closed at the ends thereof by means of corner protectors (122) that comprise a hole that lets the cable for the electrical connection of the electrical outlet module to pass through. Said casing (121) comprises wings (124) on the inner face thereof, which enable a strip (101) to be retained and on which the electrical outlets (3) slide.

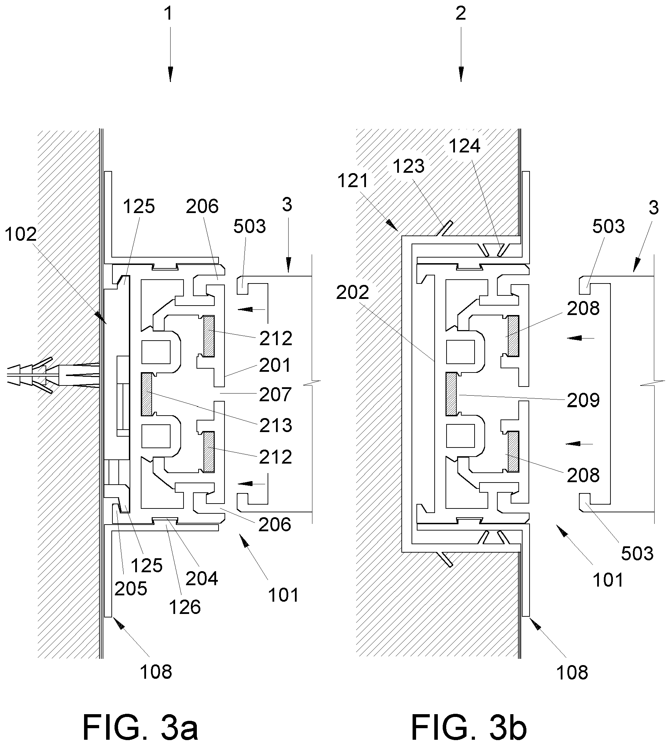

Figures 3a and 3b represent a sectional view of the strip (101) of the guide (1, 2), according to any of the two preferred embodiments for the guide (1, 2) of the electrical outlet module, object of the present invention.

Said strip (101) is a laminate piece with a hollow parallelepiped prism shape, in one of the rear bases of the strip (202) there are two longitudinal bent flanges (205) along the entire length of the strip (101), which, as shown in figure 3a , are made to fit into the tabs of the supports (125) for correctly securing the guide (1) to the wall, according to the first embodiment proposed for the guide (1) of the electrical outlet module.

The strip (101) comprises three longitudinal grooves, two side grooves (206) and a central groove (207), that run along the entire length of the strip (101) through the front base of the strip (201) opposite the lower base of the strip (202) that comprises the bent flanges (205), two of said side grooves (206) being positioned respectively on the upper portion and lower portion of said front base of the strip (201), said side grooves (206) opening up a closed longitudinal inner cavity, the cross-section of which is normally "L"-shaped, which enables the sliding electrical outlets (3) to be fastened to said guides (1), by means of retaining flanges (503) present in the rear face of the electrical outlets (3). The third central groove (207) runs longitudinally along the strip (101) through the centre of the front base of the strip (201), in such a way that said central groove (207) opens up the main inner space of the strip (101).

On the inner face of the front base of the strip (201), and situated above and below the central groove (207), there are two side conduits of the strip (208) through which two metallic side plates (212) run longitudinally, which serve as a guide and electrical contact with phase brushes (309) of the electrical outlet (3), and which transport the electric current from the cables of the electrical installation of the building to the corresponding sliding electrical outlets (3). On the inner face opposite the central groove (207), there is a third central conduit of the strip (209) through which a third metallic central plate (213) runs longitudinally, which serves as a guide and electrical contact with an earth connection brush (307) of the sliding electrical outlet (3), and which transports the earth path current from the electrical outlet (3) to the earth cable of the electrical installation of the building. In the upper and lower bases (203) of the strip (101), there are both longitudinal keyways (204), normally with a straight dovetail cross-section, which enable angular laminate profiles (108), by way of trims, to be coupled to the top and bottom of the strip (101).

As shown in figures 1 and 2 , the electrical outlet module enables the consecutive installation of an undetermined number of guides (1, 2), thus enabling the creation of a continuous longitudinal structure that transports the electric current to separate points of a fixed electrical outlet of the building. In order to enable the consecutive installation of guides (1, 2), a set of pieces, a pair of electrical connectors (107) and a mechanical extender (109) are provided. The mechanical extender (109) mechanically connects two strips (101) that are situated consecutively. Said mechanical extender (109) has a flat laminate geometry with two tabs (111) situated on the top and bottom of the ends thereof, in such a way that said tabs (111) fit into the bent flanges (205) of the strip (101). Said mechanical extender (109) comprises three holes, one central hole of the mechanical extender (112) and two side holes of the mechanical extender (113) that enable said mechanical extender (109) to be fastened to the wall and to each one of the strips (101) installed consecutively, normally using through screws that are screwed to the wall and the strips (101).

The electrical connector (107) electrically connects the electrical outlet module to the local electrical grid of the building and the electrical connection of the two strips (101) situated consecutively is carried out by means of linking two electrical connectors (107). The electrical connector (107) comprises, on one of the bases with projections (118), three metallic bands, a metallic earth band (114) and two metallic phase bands (115), which respectively make electrical contact with each one of the metallic side plate (212) and the metallic central plate (213) that run through the inside of the strip (101), the geometry of said metallic bands (114, 115) normally being of the flat laminate type (of the zinc sheet type or similar), folded on itself and with such an opening in said fold that an elastic pressure is exerted upon the metallic side plates (212) and the metallic central plate (213) in such a way that the electrical contact between the electrical connector (107) and the strip (101) is ensured. Likewise, on this same base with projections (118) of the electrical connector (107), there is a projection provided with a screw (116) that is inserted through the inner portion of the central groove (207) of the strip (101). Said projection provided with a screw (116) includes a screw, the head of which remains on the outer portion of the central groove (207) of the strip (101), in such a way that as said screw is tightened, the electrical connector (107) is fastened and immobilised inside the strip (101). The electrical connector (107) comprises in the base (117) of the electrical connector (107), opposite the base with projections (118) that comprises the metallic bands (114, 115), three holes (119) of the electrical connector (107) that leave three metallic contacts exposed, joined electrically with the three metallic bands (114, 115).

In order to provide electrical continuity between two strips (101), two electrical connectors (107) are arranged facing each other through the bases (117) of the electrical connector (107) that are provided with holes (119). When an electrical connector (107) is placed facing another electrical connector (107), through the two bases (117) thereof of the electrical connector (107) respectively, three cables or metallic pieces that carry out the electrical connection between the inner metallic contacts to the three holes (119) of the electrical connector (107) are inserted through the holes (119) of the electrical connector (107) of said bases (117) of the electrical connector (107). Said cables are tightened via a clamping screw (120) in each electrical connector (107) so that they are fastened to said electrical connectors (107).

Once two strips (101) are installed consecutively by means of the electrical connectors (107) and the mechanical extender (109), the electrical connectors (107) and the mechanical extender (109) are covered with a trim (110) with a laminate profile geometry with a "C"-shaped cross-section for the first embodiment proposed for the guide (1), or flat for the second embodiment proposed for the guide (2). On the second end (214b) of the strip (101) on which a new strip (101) does not need to be installed consecutively, a closing box (104) is installed by way of closure with a closing box lid (106) that closes said closing box (104). The closing box (104) comprises tabs (220) that fit into the bent flanges (205) of the strip (101). The closing box (104) comprises two holes, a first hole of the closing box (218) and a second hole of the closing box (219), for fastening said closing box (104) to the wall and to the strip (101). The electric current transported by the cables of the electric installation of the building is inserted through the first end (214a) of the strip (101), through a connection box (103) and an electrical connector (107). The connection box (103) has an open hollow shape on two of the faces thereof, with three slots (215) that may be drilled on three different faces, in order to open a hollow in one of said faces of the connection box (103) to let a current conducting cable pass through, which is connected to the electrical connector (107).

In a possible embodiment of the connection box (103), said connection box (103) normally comprises a switch (222) on one of the faces thereof, which enables the voltage of the electrical outlets (3) installed on the guide (1) to be connected and disconnected. The connection box (103) comprises tabs (221) that fit into the bent flanges (205) of the strip (101). The connection box (103) comprises two holes, a first hole of the connection box (216) and a second hole of the connection box (217) for fastening said connection box (103) to the wall and to the strip (101). The assembly formed of the connection box (103) and the electrical connection (107) are covered with a connection box lid (105) by way of trim, with a laminate profile geometry with a "C"-shaped cross-section for the first embodiment proposed for the guide (1) or flat for the second embodiment proposed for the guide (2).

In the two embodiments of the guide (1, 2) of the electrical outlet module, object of the present invention, the installation of the electrical outlets (3) on said guide (1, 2) is carried out by inserting said electrical outlets (3) through the ends (214a, 214b) of the strips (101), inserting retaining flanges (503) of the electrical outlets (3) into the side grooves (206) of the strip (101), the electrical outlets (3) thus sliding towards the inside of the strips (101).

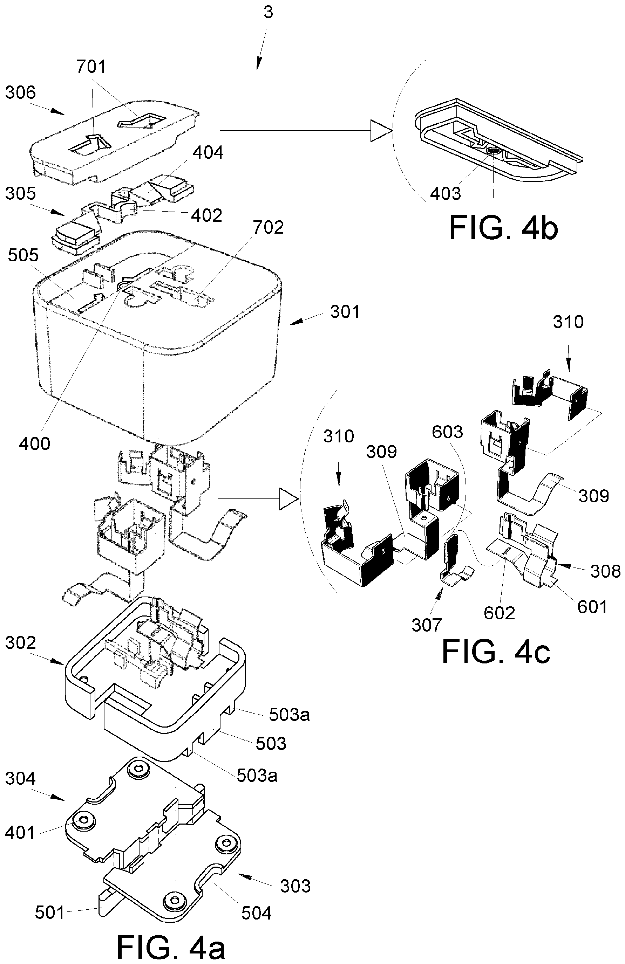

Figures 4a, 4b and 4c respectively show an exploded perspective view and two detailed views of a sliding electrical outlet (3). In the embodiment shown in figures 4a, 4b and 4c , a universal type electrical outlet is proposed, to which different types of male plugs are connected, according to different types of connections in different countries and regions.

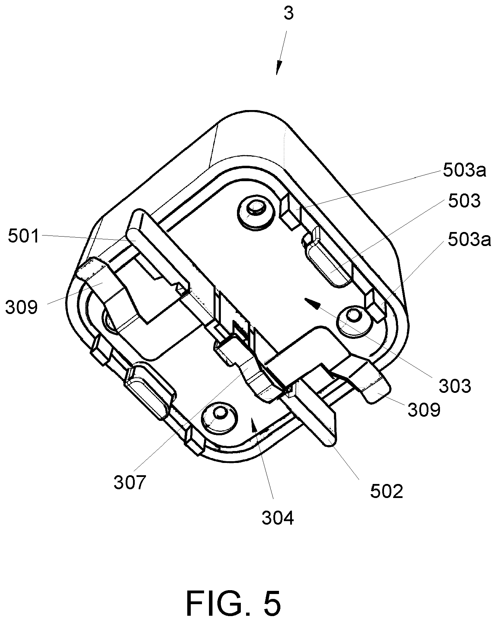

Figure 5 shows a view of the rear face of a sliding electrical outlet (3). The electrical outlets (3) of the electrical outlet module, object of the present invention, comprise at least two retaining flanges (503) on the rear face thereof that fit into the side grooves (206) of the strips (101), providing the electrical outlet (3) with greater consistency in the fastening thereof to the guide (1, 2) and avoiding levering stresses in the connection of the electrical outlet (3) to the guide (1, 2), in such a way that the electrical outlets (3) slide through the guide (1, 2) without coming out of it, unless the electrical outlets (3) are slid up to one of the ends (214a, 214b) of the strip (101). In a possible embodiment of the electrical outlet (3), there are collateral flanges (503a), which provide the electrical outlet (3) with greater stability in the sliding movement thereof through the guide (1, 2), thus preventing it from swinging.

As shown in figure 4a , the electrical outlet (3) is closed at the rear by two lids, an upper portion of the rear lid of the electrical outlet (303) and a lower portion of the rear lid of the electrical outlet (304). In figure 5 , it may be seen that the upper portion of the rear lid of the electrical outlet (303) and the lower portion of the read lid of the electrical outlet (304) comprise projections (501, 502). Said projections (501, 502) are inserted through the central groove (207) of the strip (101). Said projections (501, 502) produce a series of grooves or openings, through which the phase brushes (309) and the earth connection brush (307) of the electrical outlet (3) protrude.

The electrical outlet (3) comprises an outer casing (301) and an inner casing (302). The inner casing (302) comprises, in the rear portion thereof, the retaining flanges (503) that fit into the longitudinal side grooves (206) of the strip (101). The inner casing (302) and the outer casing (301) produce a cavity inside that serves to house a portion of the brushes (307, 309) that remain inside the electrical outlet (3) and electrical poles such as an earth pole (308) and phase poles (310) linked to the brushes (307, 309). The upper portion of the rear lid of the electrical outlet (303) and the lower portion of the rear lid of the electrical outlet (304) comprise recesses (504) that enable the upper portion of the rear lid of the electrical outlet (303) and the lower portion of the rear lid of the electrical outlet (304) to accommodate the retaining flanges (503) of the inner casing (302). The upper portion of the rear lid of the electrical outlet (303) and the lower portion of the electrical outlet (304) comprise through-holes (401) that enable the upper portion of the rear lid of the electrical outlet (303) and the lower portion of the rear lid of the electrical outlet (304) to be fastened to the inner and outer casings (302, 301) via through screws that pass through the inner casing (302) and are screwed into the outer casing (301).

Figure 4c shows a detailed view of the brushes (307, 309) and the electrical poles (308, 310) linked to the brushes (307, 309) of the electrical outlet (3).

The earth connection brush (307) comprising a flange (603) has a geometry such that, in the portion that protrudes from the electrical outlet (3), it comprises a plurality of flat laminate faces producing a "C"-shape on the same plane as the projections (501, 502) of the electrical outlet (3), with the convex portion thereof towards the outside of the electrical outlet (3), in contact with and putting elastic pressure on the metallic central plate (213) that serves as an earth connection on the guide (1, 2). The phase current conducting brushes (309), have a geometry that is identical to each other, such that in the portion that protrudes from the electrical outlet (3) they comprise a plurality of flat laminate faces that respectively produce, upwards and downwards from the projections (501, 502), a "C" shape, orientated inversely to the "C" shape that the earth connection brush (307) produces, with the concave portion towards the outside of the electrical outlet (3), which is in contact with and puts elastic pressure on the metallic side plates (212) that serve as a phase conductor in the guide (1, 2).

As may be seen in figure 4c , the earth pole (308) comprises a flange (601) and a groove (602).

The object of special protection is a type of sliding electrical outlet (3), of universal type, to which different types of male plugs are connected, according to the different types of connections present in different countries and regions. This type of universal sliding electrical outlet (3) means that the installation of the electrical outlet module, object of the present invention, is especially relevant for those places that house people that come from very different areas, places such as hotels, transport stations, hospitals, exhibitions, international fairs, etc.

As shown in figure 4a , it may be seen that said universal sliding electrical outlet (3) includes a particular feature: it is a protector (305) against accidental electrical contacts in UK type connection of the electrical output (3), the UK connection being the one that corresponds to the UK connection side holes (701) and the UK connection central hole (702) for plugs referred to in said figure 4a . Accidental contacts are produced by the unintentional insertion of metallic elements that are in contact with a person's hand, or the insertion of a child's fingers in the UK connection side holes (701) that contain the electrical phase contacts. Said protection is included in the UK connection side holes (701) of the UK type connection since said connection comprises the UK connection side holes (701) of a greater size for the insertion of the contacts of the corresponding male plug thereof, thus being appropriate to protect said connection via a protector (305).

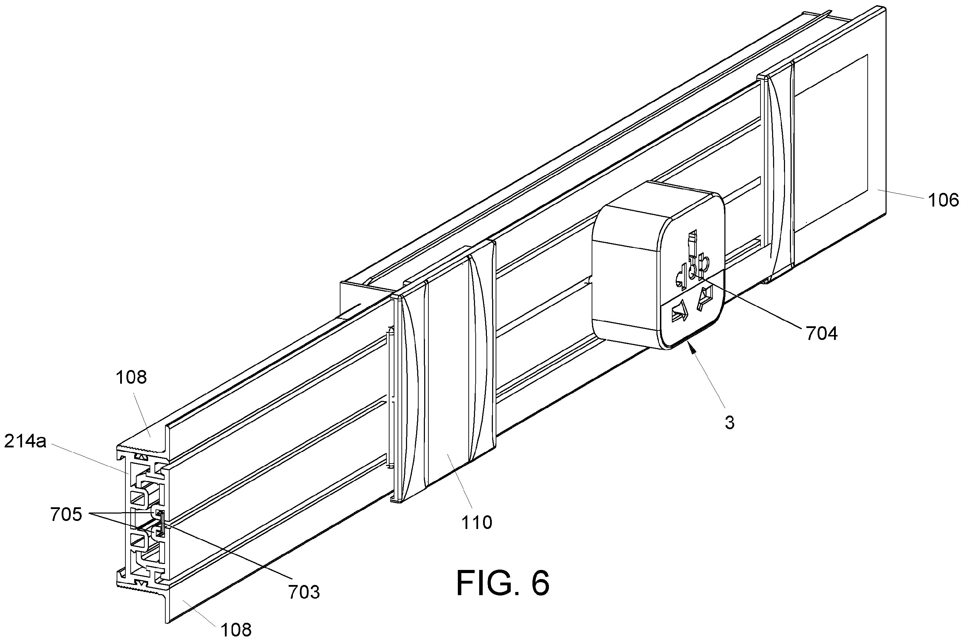

An electrical outlet (3) for L-type plugs is seen in figure 6 comprising the UK connection side holes (701) and also an L-connection central hole (704) to insert the phase and earth contacts of the L-type plug.

The electrical protector (305) is housed inside a compartment (505) with an electrical protector lid (306) that is closed via a screw. Said lid of the electrical protector (306), the inner face of which is seen in figure 4b, and includes the UK connection side holes (701) for UK connection and a supplementary hole of the electrical outlet (403) that fits into a hole of the electrical outlet (400) to house the point end of the screw tip that fastens the electrical protector (306) to the outer casing (301) of the electrical outlet (3). This protector (305), normally manufactured in a plastic material, has an elongated geometry, producing various depressions and projections that fit with their corresponding projections and depressions carried out in the compartment (505) and the lid of the electrical protector (306). The protector (305) comprises, in the central portion thereof, a geometry in the form of a bearing (402), upon which the screw that fastens the lid of the electrical protector (306) to the outer casing (301) of the electrical outlet (3) slides. The protector (305) comprises both inclined ramps (404), which obstruct the UK connection side holes (701), thus preventing contact with the live terminals, unless strong pressure is applied that makes said ramps (404) yield through elastic bending and moves towards the lower portion of the compartment (505).

The guide (1, 2) comprises a coupling profile (705) that in turn comprises a longitudinal removable sealing gasket (703) in order to prevent dirt, liquid, etc. from entering inside the guide (1, 2).

The longitudinal removable sealing gasket (703) is manufactured in a material selected from between plastic, gum, rubber, silicone, soft metal, cork, felt, fibreglass and plastic polymer.

The present invention should not be limited to the embodiments described herein. Other embodiments that include small modifications into the geometry of the guide (1, 2) or the electrical outlets (3) that slide along said guide (1, 2), object of the present invention, may be carried out by a person skilled in the art in light of the present description within the scope of the invention which is defined in the following claims.

## Claims

1. An electrical outlet module comprising
- a guide (1, 2),
- electrical outlets (3) that slide along the length of said guide (1, 2), wherein
- the guide (1, 2) for electrical outlets (3) comprises at least one strip (101) with at least one central groove (207) in a front base of the strip (201), through which an inner space of said strip (101) is accessed,
- the guide (1, 2) for electrical outlets (3) houses metallic side plates (212) and a metallic central plate (213) in the inside of the strip (101), the metallic side plates (212) and the metallic central plate (213) adapted to take the electric current to an earth pole (308) and phase poles (310) of the sliding electrical outlets (3),
- the electrical outlets (3) comprise an earth connection brush (307) and phase brushes (309) that are inserted through the central groove (207) that provides access to the inner space of the strip (101) of the guide (1, 2) and carry out a permanent electrical contact with the metallic side plates (212) and the metallic central plate (213), of the guide (1, 2), thus ensuring the continuity of electric current flow to the electrical outlets (3), **characterised in that**
- the strip (101) of the guide (1, 2) comprises two side grooves (206), each one of them respectively situated on both sides of the central groove (207) that provides access to the inner space of the strip (101), in order to guide the sliding movement of the electrical outlet (3) along the guide (1, 2);
- the electrical outlets (3) comprise at least two retaining flanges (503), each one of them situated respectively on the upper edge and on the lower edge of the rear portion of the electrical outlet (3), each one of the retaining flanges (503) being inserted in each one of the side grooves (206) situated on both sides of the central groove (207) that provides access to the inner space of the strip (101), thus carrying out the fastening of the electrical outlet (3) to the guide (1, 2), and likewise enabling the sliding movement of the electrical outlet (3) along the guide (1, 2).
- and the guides (1, 2) further comprise:
- a connection box (103), embedded in a first end (214a) of the strip (101),
- a first electrical connector (107) housed inside the connection box (103), by means of which the electric current is inserted into the electrical outlet module,
- a connection box lid (105) that closes the front of the connection box (103),
- a closing box (104), the closing box fitting into a second end (214b) of the strip (101),
- a closing box lid (106) that closes the closing box (104),
- a mechanical extender (109) that fits two strips (101) through the end sections thereof, making tabs (111) of the mechanical extender (109) fit into bent flanges (205) of the strip (101), in order to consecutively install two strips (101),
- an electrical extender formed by a second and third electrical connectors (107) facing each other and both mechanically and electrically joined to one another by a base (117) of the second and third electrical connectors (107), a trim (110) that hides the mechanical extender (109) and the electrical extender,
- angular profiles (108) comprising a longitudinal key (126) that is inserted into a keyway (204) present in an upper base and in an lower base of the strip (203).

2. The electrical outlet module according to claim 1, **characterized in that** the electrical outlet (3) is of the universal type, in which any type of male plug is connected, including:
- a UK plug for which there are UK connection side holes (701) and a UK connection central hole (702) to insert the phase and earth contacts of the UK plug in the electrical outlet (3), and
- an L-type plug for which there are UK connection side holes (701) and an L-connection central hole (704) to insert the phase and earth contacts of the L-plug in the electrical outlet (3).

3. The electrical outlet module according to claim 2, **characterized in that** the electrical outlet (3) comprises a compartment (505) in the front portion, covered by an electrical protector lid (306), which houses an electrical protector (305) against accidental electrical contacts for the UK type connection of the electrical outlet (3), the electrical protector (305) comprising ramps (404) that are situated so as to obstruct the UK connection side holes (701) for intake of the earth pole (308) and the phase poles (310), where upon insertion of the male plug, the ramps (404) yield elastically downwards leaving the UK connection side holes (701) open.

4. The electrical outlet module according to claim 1, **characterized in that** there are three of the metallic side plates (212) and the metallic central plate (213), of the guide (1, 2), which correspond to a single-phase electrical outlet (3) with an earth connection.

5. The electrical outlet module according to claim 4, **characterized in that** the central metallic plate (213) designed for conducting the earth current is housed in the inner space of the strips (101), specifically in the central conduit of the strip (209) placed on the face opposite the face that comprises the central groove (207) that provides access to the inner space of the strip (101), and the metallic side plates (212) designed for conducting the phase current are housed in the inner space of the strips (101), specifically in the side conduits of the strip (208) situated on both sides of the central groove (207).

6. The electrical outlet module according to claim 5, **characterized in that** there are three of the earth connection brush (307) and the phase brushes (309) of the electrical outlets (3), and they have a laminate morphology with a concave profile such that they exert a certain elastic pressure on the metallic side plates (212) and the metallic central plate (213) of the guides (1, 2), thus ensuring a permanent electrical contact and enabling the sliding movement of the electrical outlet (3) along the guides (1, 2) without losing electrical contact.

7. The electrical outlet module according to claim 6, **characterized in that** the concave profile of the earth connection brush (307) and the phase brushes (309) is formed by a plurality of flat faces.

8. The electrical outlet module according to claim 1, **characterized in that** the first electrical connector (107) comprises:
- electric connector holes (119) in the base (117) of the electrical connector (107), electric current conducting cables being insertable through the electric connector holes (119),
- a clamping screw (120) for retaining and fastening the electric current conducting cables,
- metallic bands (114, 115) with a curved profile, which carry out an elastic pressure on the metallic side plates (212) and the metallic central plate (213) of the strips (101), thus ensuring the electrical connection,
- a projection (116) provided with a screw, the projection provided with a screw (116) being inserted through the inside of the central groove (207) that provides access to the inner space of the strip (101), the screw head remaining outside the central groove (207), in such a way that as the screw is turned, the electric connector (107) is retained and fastened to the strip (101).

9. The electrical outlet module according to claim 1, **characterized in that** the guide (2) is installed embedded into a wall recess by means of a casing (121) that is fastened to the wall via attachment notches (123), the casing (121) comprising wings (124) facing each other for fastening the strip (101) to the guide (2), the strip (101) being press-fitted between the wings (124) both with intervening angular profiles (108), which fit into the strip (101) by inserting the key (126) into one of the faces of the angular profiles (108) in the keyway (204) present in the upper and lower bases (203) of the strips (101), where the casing (121) has a C-shaped laminate profile geometry, and acts as a receptacle for the strip (101), serving as an intermediate surface between the wall recess and the strip (101).

10. The electrical outlet module according to claim 9, **characterized in that** the angular profiles (108) comprise an adhesive face on the concave portion thereof, in such a way that the angular profiles (108) remain stuck to the wall, thus carrying out the fastening of the guide (2) to the wall.

11. The electrical outlet module according to claim 9 or 10, **characterized in that** the casing (121) is closed at its ends via two corner protectors (122), the corner protectors (122) comprising a hole for inserting a cable that transports the electric current to the metallic side plates (212) and the metallic central plate (213) of the strip (101).

12. The electrical outlet module according to claim 1, **characterized in that** the guide (1) comprises supports (102) fastened to the wall, the supports comprising a support tabs (125) that fit into the bent flanges (205) of the strip (101), in such a way that - the strip (101) is made to fit into the support (102), the guide (1) thus being retained and fastened to the wall, where the angular profiles (108) are inserted into the strip (101) making the key (126) that is present fit into one of the faces of said angular profiles (108) in the keyway present (204) in each of the upper and lower bases (203) of the strip (101).

13. The electrical outlet module according to claim 8, **characterized in that** for the joining of the two electrical connectors (107) that from the electrical extender, cables or metallic plates are inserted through the electrical connector holes (119) of each one of the electrical connectors (107), in such a way that one end of each cable is inserted into each one of the electrical connector holes (119) of the electrical connector (107) and the other end of the cable is inserted into the corresponding hole (119) of the other electrical connector (107), the clamping, retaining and fastening screw (120) of each electrical connector (107) being turned to retain and fasten the cables of each electrical connector (107).

14. The electrical outlet module according to any of the previous claims, **characterized in that** the guide (1, 2) comprises a coupling profile (705) that comprises a longitudinal removable sealing gasket (703).

15. The electrical outlet module according claim 14, **characterized in that** the longitudinal removable sealing gasket (703) is manufactured from a material selected from between plastic, gum and rubber.

## Patentansprüche

1. Elektrisches Auslassmodul, umfassend:
- eine Führung (1, 2),
- elektrische Auslässe (3), die entlang der Länge der Führung (1, 2) gleiten,
wobei
- die Führung (1, 2) für elektrische Auslässe (3) mindestens eine Leiste (101) mit mindestens einer zentralen Rille (207) in einer vorderen Basis der Leiste (201) umfasst, durch welche der Zugang zu einem Innenraum der Leiste (101) erfolgt,
- wobei die Führung (1, 2) für elektrische Auslässe (3) metallische Seitenplatten (212) und eine metallische zentrale Platte (213) innerhalb der Leiste (101) aufnimmt, wobei die metallische Seitenplatten (212) und die metallische zentrale Platte (213) angepasst sind, um den elektrischen Strom zu einem Erdungspol (308) und zu Phasenpolen (310) der gleitenden elektrischen Auslässe (3) zu führen,
- wobei die elektrischen Auslässe (3) eine Erdungsbürste (307) und Phasenbürsten (309) umfassen, welche durch die zentrale Rille (207), die den Zugang zu dem Innenraum der Leiste (101) der Führung (1, 2) bereitstellt, eingesetzt sind und einen permanenten elektrischen Kontakt mit den metallischen Seitenplatten (212) und der metallischen zentralen Platte (213) der Führung (1, 2) ausführen, wodurch sie die Kontinuität des elektrischen Stromflusses zu den elektrischen Auslässen (3) gewährleisten,
**dadurch gekennzeichnet, dass**
- die Leiste (101) der Führung (1, 2) zwei Seitenrillen (206) umfasst, wobei jede von ihnen jeweils an beiden Seiten der zentralen Rille (207), die den Zugang zu dem Innenraum der Leiste (101) bereitstellt, angeordnet sind, um die Gleitbewegung des elektrischen Auslasses (3) entlang der Führung (1, 2) zu führen;
- die elektrischen Auslässe (3) mindestens zwei Halteflansche (503) umfassen, wobei jede von ihnen jeweils an dem oberen Rand und an dem unteren Rand des hinteren Teils des elektrischen Auslasses (3) angeordnet sind, wobei jede der Halteflansche (503) in jeder der Seitenrillen (206), die an beiden Seiten der zentralen Rille (207), die den Zugang zu dem Innenraum der Leiste (101) bereitstellt, angeordnet sind, eingesetzt ist, wodurch sie das Anbringen des elektrischen Auslasses (3) an der Führung (1, 2) ausführen und ebenfalls die Gleitbewegung des elektrischen Auslasses (3) entlang der Führung (1, 2) ermöglichen;
- und dass die Führungen (1, 2) ferner Folgendes umfassen:
- eine Anschlussdose (103), welche in einem ersten Ende (214a) der Leiste (101) eingebettet ist,
- einen ersten elektrischen Anschluss (107), welcher innerhalb der Anschlussdose (103) aufgenommen ist, durch welche der elektrische Strom in das elektrische Auslassmodul eingesetzt ist,
- einen Anschlussdosendeckel (105), welcher die Vorderseite der Anschlussdose (103) schließt,
- ein Schließgehäuse (104), wobei das Schließgehäuse in ein zweites Ende (214b) der Leiste (101) eingefügt wird,
- einen Schließgehäusedeckel (106), welcher das Schließgehäuse (104) schließt,
- ein mechanisches Erweiterungsglied (109), welches zwei Leisten (101) durch die Endabschnitte davon einfügt, wobei die Laschen (111) des mechanischen Erweiterungsglieds (109) in gebogene Flansche (205) der Leiste (101) eingefügt sind, um zwei Leisten (101) nacheinander zu installieren,
- ein elektrisches Erweiterungsglied, welches durch einen zweiten und einen dritten elektrischen Anschluss (107), die einander gegenüber stehen und sowohl mechanisch als auch elektrisch miteinander durch eine Basis (117) des zweiten und des dritten elektrischen Anschlusses (107) verbunden sind, und einen Bezug (110), welcher das mechanische Erweiterungsglied (109) und das elektrische Erweiterungsglied versteckt, gebildet ist,
- winkelförmige Profile (108), welche einen länglichen Keil (126) umfassen, der in eine Keilnut (204), die in einer oberen Basis und in einer unteren Basis der Leiste (203) vorhanden ist, eingesetzt wird.

2. Elektrisches Auslassmodul nach Anspruch 1, **dadurch gekennzeichnet, dass** der elektrische Auslass (3) dem Universaltyp entspricht, worin jede Art von Stecker, einschließlich:
- eines UK-Steckers, für welchen es Seitenlöcher für UK-Anschlüsse (701) und ein zentrales Loch für UK-Anschlüsse (702) gibt, um die Phasen- und Erdungskontakte des UK-Steckers in dem elektrischen Auslass (3) einzusetzen, und
- eines L-artigen Steckers, für welchen es Seitenlöcher für UK-Anschlüsse (701) und ein zentrales Loch für L-artige Anschlüsse (704) gibt, um die Phasen- und Erdungskontakte des L-Steckers in dem elektrischen Auslass (3) einzusetzen, verbunden wird.

3. Elektrisches Auslassmodul nach Anspruch 2, **dadurch gekennzeichnet, dass** der elektrische Auslass (3) ein Fach (505) in dem vorderen Teil umfasst, welches von einem elektrischen Schutzdeckel (306), welcher ein elektrisches Schutzelement (305) gegen unbeabsichtigte elektrische Kontakte für den UK-Anschluss des elektrischen Auslasses (3) aufnimmt, bedeckt ist, wobei das elektrische Schutzelement (305) Rampen (404) umfasst, welche zum Blockieren der Seitenlöcher für UK-Anschlüsse (701) für die Aufnahme des Erdungspols (308) und der Phasenpole (310) angeordnet sind, wobei die Rampen (404) bei Einsetzung des Steckers elastisch abwärts nachgeben, indem sie die Seitenlöcher für UK-Anschlüsse (701) offen lassen.

4. Elektrisches Auslassmodul nach Anspruch 1, **dadurch gekennzeichnet, dass** es drei von den metallischen Seitenplatten (212) und der metallischen zentralen Platte (213) der Führung (1, 2) gibt, die einem einphasigen elektrischen Auslass (3) mit Erdanschluss entsprechen.

5. Elektrisches Auslassmodul nach Anspruch 4, **dadurch gekennzeichnet, dass** die zentrale metallische Platte (213), welche zum Leiten des Erdstroms ausgelegt ist, in dem Innenraum der Leisten (101), konkret in dem zentralen Kanal der Leiste (209), der an der Seite gegenüber der Seite, welche die zentrale Rille (207) umfasst, die den Zugang zu dem Innenraum der Leiste (101) bereitstellt, angeordnet ist, und dass die metallischen Seitenplatten (212), die zum Leiten des Phasenstroms ausgelegt sind, in dem Innenraum der Leisten (101), konkret in den Seitenkanälen der Leiste (208), die an beiden Seiten der zentralen Rille (207) angeordnet sind, aufgenommen sind.

6. Elektrisches Auslassmodul nach Anspruch 5, **dadurch gekennzeichnet, dass** es drei von den Erdungsbürsten (307) und den Phasenbürsten (309) der elektrischen Auslässe (3) gibt, und dass sie eine laminierte Morphologie mit einem konkaven Profil aufweisen, sodass sie einen bestimmten elastischen Druck auf die metallischen Seitenplatten (212) und die metallische zentrale Platte (213) der Führungen (1, 2) ausüben, wodurch sie einen permanenten elektrischen Kontakt gewährleisten und die Gleitbewegung des elektrischen Auslasses (3) entlang der Führungen (1, 2) ohne das Verlieren des elektrischen Kontakts ermöglichen.

7. Elektrisches Auslassmodul nach Anspruch 6, **dadurch gekennzeichnet, dass** das konkave Profil der Erdungsbürste (307) und der Phasenbürsten (309) durch mehrere flache Seiten gebildet ist.

8. Elektrisches Auslassmodul nach Anspruch 1, **dadurch gekennzeichnet, dass** der erste elektrische Anschluss (107) Folgendes umfasst:
- elektrische Anschlusslöcher (119) in der Basis (117) des elektrischen Anschlusses (107), wobei die elektrischen Strom leitenden Kabel durch die elektrischen Anschlusslöcher (119) eingesetzt werden können,
- eine Klemmschraube (120) zum Halten und Anbringen der den elektrischen Strom leitenden Kabel,
- Metallbänder (114, 115) mit einem gebogenen Profil, welche einen elastischen Druck auf die metallischen Seitenplatten (212) und die metallische zentrale Platte (213) der Leisten (101) ausüben, wodurch sie den elektrischen Anschluss gewährleisten,
- einen Vorsprung (116), welcher mit einer Schraube bereitgestellt ist, wobei die Schraube (116) durch die Innenseite der zentralen Rille (207), die den Zugang zu dem Innenraum der Leiste (101) bereitstellt, eingesetzt ist, wobei der Schraubenkopf außerhalb der zentralen Rille (207) derart verbleibt, dass der elektrische Anschluss (107) beim Drehen der Schraube gehalten und an der Leiste (101) angebracht ist.

9. Elektrisches Auslassmodul nach Anspruch 1, **dadurch gekennzeichnet, dass** die Führung (2) durch ein Gehäuse (121), welches an der Wand über Befestigungskerben (123) angebracht ist, in einer Wandaussparung eingebettet installiert ist, wobei das Gehäuse (121) Flügel (124) aufweist, welche einander zum Anbringen der Leiste (101) an der Führung (2) gegenüber stehen, wobei die Leiste (101) durch Pressen zwischen den Flügeln (124), zusammen mit den zwischengeschalteten winkelförmigen Profilen (108) eingefügt ist, welche in die Leiste (101) durch Einsetzen des Keils (126) in eine der Seiten der winkelförmigen Profile (108) in der Keilnut (204), die in der oberen und unteren Basis (203) der Leisten (101) vorhanden ist, eingefügt sind, wobei das Gehäuse (121) eine C-förmige laminierte Profilgeometrie aufweist und als Aufnahme für die Leiste (101) fungiert, wodurch es als zwischenliegende Fläche zwischen der Wandaussparung und der Leiste (101) dient.

10. Elektrisches Auslassmodul nach Anspruch 9, **dadurch gekennzeichnet, dass** die winkelförmigen Profile (108) eine klebende Seite an dem konkaven Teil davon umfassen, sodass die winkelförmigen Profile (108) an der Wand stecken bleiben, wodurch sie das Anbringen der Führung (2) an der Wand ausführen.

11. Elektrisches Auslassmodul nach Anspruch 9 oder 10, **dadurch gekennzeichnet, dass** das Gehäuse (121) an seinen Enden über zwei Eckschutze (122) geschlossen ist, wobei die Eckschutze (122) ein Loch zum Einsetzen eines Kabels, welches den elektrischen Strom an die metallischen Seitenplatten (212) und die metallische zentrale Platte (213) der Leiste (101) transportiert, umfassen.

12. Elektrisches Auslassmodul nach Anspruch 1, **dadurch gekennzeichnet, dass** die Führung (1) Stützen (102) umfasst, welche an der Wand angebracht sind, wobei die Stützen Stützlaschen (125) umfassen, welche in die gebogenen Laschen (205) der Leiste (101) derart eingefügt sind, dass die Leiste (101) in die Stütze (102) eingefügt ist, wobei die Führung (1) somit gehalten und an der Wand angebracht ist, wobei die winkelförmigen Profile (108) in die Leiste (101) eingesetzt sind, wobei der Keil (126), welcher vorhanden ist, in eine der Seiten der winkelförmigen Profile (108) in der Keilnut (204), welche in jeder der oberen und unteren Basen (203) der Leiste (101) vorhanden ist, eingefügt ist.

13. Elektrisches Auslassmodul nach Anspruch 8, **dadurch gekennzeichnet, dass** Kabel oder Metallplatten zum Zusammenfügen der zwei elektrischen Anschlüsse (107) aus dem elektrischen Erweiterungsglied, durch die elektrischen Anschlusslöcher (119) von jedem der elektrischen Anschlüsse (107) derart eingesetzt werden, dass ein Ende jedes Kabels in jedes der elektrischen Anschlusslöcher (119) des elektrischen Anschlusses (107) eingesetzt wird und dass das andere Ende des Kabels in das entsprechende Loch (119) des anderen elektrischen Anschlusses (107) eingesetzt wird, wobei die Klemm-, Halte- und Befestigungsschraube (120) jedes elektrischen Anschlusses (107) gedreht wird, um die Kabel jedes elektrischen Anschlusses (107) zu halten und zu befestigen.

14. Elektrisches Anschlussmodul nach einem der vorhergehenden Ansprüche, **dadurch gekennzeichnet, dass** die Führung (1, 2) ein Kopplungsprofil (705) umfasst, welches eine längliche abnehmbare Dichtung (703) umfasst.

15. Elektrisches Auslassmodul nach Anspruch 14, **dadurch gekennzeichnet, dass** die längliche abnehmbare Dichtung (703) aus einem Material hergestellt ist, welches aus Kunststoff, Kautschuk und Gummi hergestellt ist.

## Revendications

1. Module de prise électrique comprenant
- un guide (1, 2),
- des prises électriques (3) qui coulissent sur la longueur dudit guide (1, 2),
dans lequel
- le guide (1, 2) des prises électriques (3) comprend au moins une bande (101) avec, au moins, une rainure centrale (207) dans une base avant de la bande (201), à travers laquelle un espace intérieur de ladite bande (101) est accédé,
- le guide (1, 2) des prises électriques (3) loge des plaques latérales métalliques (212) et une plaque centrale métallique (213) à l'intérieur de la bande (101), les plaques latérales métalliques (212) et la plaque métallique centrale (213) étant adaptées pour prendre le courant électrique vers un raccordement à la terre (308) et des pôles de phase (310) des prises électriques coulissantes (3),
- les prises électriques (3) comprennent une brosse de raccordement à la terre (307) et des brosses de phase (309) insérées à travers la rainure centrale (207) qui permet d'accéder à l'espace intérieur de la bande (101) du guide (1, 2) et réaliser un contact électrique permanent avec les plaques latérales métalliques (212) et la plaque centrale métallique (213) du guide (1, 2), assurant ainsi la continuité du flux de courant électrique vers les prises électriques (3),
**caractérisé en ce que**
- la bande (101) du guide (1, 2) comporte deux rainures latérales (206), chacune d'entre elles étant situées respectivement des deux côtés de la rainure centrale (207) donnant accès à l'espace intérieur de la bande (101) pour guider le mouvement de coulissement de la prise électrique (3) le long du guide (1, 2) ;
- les prises électriques (3) comportent, au moins, deux brides de retenue (503), chacune d'entre elles étant située respectivement sur le bord supérieur et sur le bord inférieur de la partie arrière de la prise électrique (3), chacune des brides de retenue (503) étant insérée dans chacune des rainures latérales (206) situées de part et d'autre de la rainure centrale (207) donnant accès à l'espace intérieur de la bande (101), en réalisant ainsi la fixation de la prise électrique (3) au guide (1, 2), et en permettant également le mouvement de coulissement de la prise électrique (3) le long du guide (1, 2);
- et les guides (1, 2) comprennent en outre :
- une boîte de connexion (103), encastrée dans une première extrémité (214a) de la bande (101),
- un premier connecteur électrique (107) logé à l'intérieur de la boîte de connexion (103), au moyen duquel le courant électrique est inséré dans le module de prise électrique,
- un couvercle de boîte de connexion (105) qui ferme l'avant de la boîte de connexion (103),
- une boîte de fermeture (104), cette dernière s'adaptant à une seconde extrémité (214b) de la bande (101),
- un couvercle de la boîte de fermeture (106) qui ferme la boîte de fermeture (104),
- un prolongateur mécanique (109) qui adapte deux bandes (101) à travers ses sections d'extrémité, faisant que les languettes (111) du prolongateur mécanique (109) s'adaptent dans des rebords coudés (205) de la bande (101), afin d'installer consécutivement deux bandes (101),
- un prolongateur électrique formé par un deuxième et un troisième connecteur électrique (107) l'un face à l'autre et reliés mécaniquement et électriquement l'un à l'autre par une base (117) du deuxième et troisième connecteurs électriques (107), une garniture (110) qui cache le prolongateur mécanique (109) et le prolongateur électrique,
- des profilés angulaires (108) comprenant une clé longitudinale (126) qui est insérée dans une rainure de clavette (204) présente dans une base supérieure et dans une base inférieure de la bande (203).

2. Module de prise électrique selon la revendication 1, **caractérisé en ce que** la prise électrique (3) est de type universel, dans laquelle tout type de prise mâle est connectée, comprenant :
- une prise britannique pour laquelle il y a des trous latéraux de connexion britannique (701) et un trou central de connexion britannique (702) pour insérer les contacts de phase et de terre de la prise britannique dans la prise électrique (3), et
- une prise en L pour laquelle il y a des trous latéraux de connexion britannique (701) et un trou central de connexion en L (704) pour insérer les contacts de phase et de terre de la prise en L dans la prise électrique (3).

3. Module de prise électrique, selon la revendication 2, **caractérisé en ce que** la prise électrique (3) comprend un compartiment (505) dans la partie avant, recouvert par un couvercle de protection électrique (306), qui loge un protecteur électrique (305) contre les décharges électriques accidentelles des contacts pour la connexion de type britannique de la prise électrique (3), le protecteur électrique (305) comprenant des rampes (404) situées de manière à obstruer les trous latéraux de connexion (701) britanniques pour l'entrée du raccordement à la terre (308) et les pôles de phase (310) où, lors de l'insertion de la prise mâle, les rampes (404) cèdent élastiquement vers le bas en laissant les trous latéraux de connexion (701) britanniques ouverts.

4. Module de prise électrique, selon la revendication 1, **caractérisé en ce que** trois des plaques latérales métalliques (212) et la plaque centrale métallique (213) du guide (1, 2) correspondent à une prise électrique monophasée (3) avec un raccordement à la terre.

5. Module de prise électrique, selon la revendication 4, **caractérisé en ce que** la plaque métallique centrale (213) destinée à conduire le courant de terre est logée dans l'espace intérieur des bandes (101), notamment, dans le conduit central de la bande (209) placé sur la face opposée à la face qui comprend la rainure centrale (207) donnant accès à l'espace intérieur de la bande (101), et les plaques latérales métalliques (212) destinées à conduire le courant de phase sont logées dans l'espace intérieur des bandes (101), en particulier, dans les conduits latéraux de la bande (208) situés de part et d'autre de la rainure centrale (207).

6. Module de prise électrique, selon la revendication 5, **caractérisé en ce que** la brosse de raccordement à la terre (307) et les brosses de phase (309) des prises électriques (3) sont au nombre de trois et présentent une morphologie stratifiée avec un profil concave, de sorte à exercer une certaine pression élastique sur les plaques latérales métalliques (212) et la plaque centrale métallique (213) des guides (1, 2), assurant ainsi un contact électrique permanent et permettant le mouvement de coulissement de la prise électrique (3) le long les guides (1, 2), sans perdre le contact électrique.

7. Module de prise électrique selon la revendication 6, **caractérisé en ce que** le profil concave de la brosse de raccordement à la terre (307) et des brosses de phase (309) est formé par une pluralité de faces plates.

8. Module de prise électrique, selon la revendication 1, **caractérisé en ce que** le premier connecteur électrique (107) comprend :
- des trous de connecteur électrique (119) dans la base (117) du connecteur électrique (107), des câbles conducteurs de courant électrique pouvant être insérés à travers les trous de connecteur électrique (119),
- une vis de serrage (120) pour retenir et fixer les câbles conducteurs de courant électrique,
- des bandes métalliques (114, 115) avec un profil courbe, qui exercent une pression élastique sur les plaques latérales métalliques (212) et la plaque centrale métallique (213) des bandes (101), assurant ainsi la connexion électrique,
- une saillie (116) pourvue d'une vis, cette dernière (116) étant insérée à travers l'intérieur de la rainure centrale (207) qui permet d'accéder à l'espace intérieur de la bande (101), la tête de vis restant à l'extérieur de la rainure centrale (207), de sorte que, lorsque la vis est tournée, le connecteur électrique (107) est retenu et fixé à la bande (101).

9. Module de prise électrique, selon la revendication 1, **caractérisé en ce que** le guide (2) est encastré dans un évidement de paroi au moyen d'un boîtier (121) fixé au paroi par des encoches de fixation (123), le boîtier (121) comprenant des ailes (124) face à face pour fixer la bande (101) au guide (2), la bande (101) étant ajustée par pression entre les ailes (124) à la fois avec des profilés angulaires intermédiaires (108), qui s'insèrent dans la bande (101) en insérant la clé (126) dans l'une des faces des profilés angulaires (108) dans la rainure de clavette (204) présente dans les bases supérieure et inférieure (203) des bandes (101), où le boîtier (121) a une géométrie de profilé stratifiée en C et agit comme un réceptacle pour la bande (101), servant de surface intermédiaire entre l'évidement de paroi et la bande (101).

10. Module de prise électrique, selon la revendication 9, **caractérisé en ce que** les profilés angulaires (108) comportent une face adhésive sur la partie concave de ceux-ci, de sorte que les profilés angulaires (108) restent collés à la paroi, réalisant ainsi la fixation du guide (2) au paroi.

11. Module de prise électrique, selon la revendication 9 ou 10, **caractérisé en ce que** le boîtier (121) est fermé à ses extrémités par deux protecteurs d'angle (122), les protecteurs d'angle (122) comprenant un trou d'insertion d'un câble transportant le courant électrique aux plaques latérales métalliques (212) et à la plaque centrale métallique (213) de la bande (101).

12. Module de prise électrique, selon la revendication 1, **caractérisé en ce que** le guide (1) comprend des supports (102) fixés à la paroi, les supports comprenant des pattes de support (125) s'insérant dans les rebords coudés (205) de la bande (101), de manière que la bande (101) s'insère dans le support (102), le guide (1) étant ainsi retenu et fixé à la paroi, où les profilés angulaires (108) sont insérés dans la bande (101) faisant entrer la clé (126) présente dans l'une des faces des dits profilés angulaires (108) dans la rainure de clavette (204) présente dans chacune des bases supérieure et inférieure (203) de la bande (101).

13. Module de prise électrique, selon la revendication 8, **caractérisé en ce que** pour la jonction des deux connecteurs électriques (107), à partir du prolongateur électrique, des câbles ou des plaques métalliques sont insérés à travers les trous de connecteur électrique (119) de chacun des connecteurs électriques (107), de telle sorte qu'une extrémité de chaque câble soit insérée dans chacun des trous de connecteur électrique (119) du connecteur électrique (107) et l'autre extrémité du câble soit insérée dans le trou correspondant (119) de l'autre connecteur électrique (107), la vis de serrage, de retenue et de fixation (120) de chaque connecteur électrique (107) étant tournée pour retenir et fixer les câbles de chaque connecteur électrique (107).

14. Module de prise électrique, selon l'une quelconque des revendications précédentes, **caractérisé en ce que** le guide (1, 2) comprend un profilé d'accouplement (705) qui comprend un joint d'étanchéité amovible longitudinal (703).

15. Module de prise électrique, selon la revendication 14, **caractérisé en ce que** le joint d'étanchéité amovible longitudinal (703) est fabriqué à partir d'un matériau choisi parmi le plastique, la gomme et le caoutchouc.
